(19) Europäisches Patentamt

European Patent Office

Office européen des brevets

(11) **EP 0 672 572 B1**

(12) **EUROPÄISCHE PATENTSCHRIFT**

(45) Veröffentlichungstag und Bekanntmachung des Hinweises auf die Patenterteilung:
**30.12.1998 Patentblatt 1998/53**

(51) Int. Cl.⁶: **B62B 5/06**

(21) Anmeldenummer: **95810162.8**

(22) Anmeldetag: **11.03.1995**

(54) **Haltegriff für Trolley**

Handgrip for trolley

Barre de maintien pour chariots

(84) Benannte Vertragsstaaten:
**CH DE FR GB LI NL**

(30) Priorität: **17.03.1994 CH 794/94**

(43) Veröffentlichungstag der Anmeldung:
**20.09.1995 Patentblatt 1995/38**

(73) Patentinhaber:
**Bucher Management AG**
**8117 Fällanden (CH)**

(72) Erfinder: **Bucher, Peter**
**CH-8330 Pfäffikon (CH)**

(56) Entgegenhaltungen:
**WO-A-92/02160**          **DE-U- 8 524 071**
**DE-U- 8 804 719**

**Beschreibung**

Die Erfindung betrifft einen Haltegriff für einen fahrbaren Behälter, insbesondere für einen Trolley in Passagierflugzeugen, in Form eines an seinen beiden Enden befestigten Bügels. Zur Verteilung von Mahlzeiten, Getränken und andere Waren werden vor allem in Passagierflugzeugen, aber auch in Zügen, Bussen, auf Schiffen oder z.B. auch in Spitälern fahrbare Behälter, sogenannte Trolleys oder Carts verwendet. Diese bleiben bei Nichtgebrauch in den Bordküchen verstaut und gesichert, so dass sie bei heftigen Fahr- oder Flugbewegungen und auch bei einem Unfall oder bei einer Notlandung nicht herumgeworfen werden können. Für den Service werden die Trolleys von den Flugbegleitern während des Fluges durch die engen Gänge bewegt, um den Inhalt an die Passagiere zu verteilen. Heutige Trolleys weisen ein recht hohes Gesamtgewicht von bis zu 90 kg, in Ausnahmefällen bis zu 120 kg, auf. Die Abmessungen und das Nutzvolumen sind in der Regel vorgegeben, denn es muss ein möglichst grosser Volumenanteil für den Inhalt genutzt werden bei möglichst kompakten Aussenabmessungen und bei einer relativ geringen Breite des fahrbaren Behälters von z.B. nur 30 cm, welche bedingt ist durch die schmalen Gänge, vor allem in Flugzeugen, aber auch in Zügen und Reisebussen. Dies führt u.a. gezwungenermassen zu kleinen Rädern, welche einen hohen Fahrwiderstand, bzw. einen schlechten Rollwiderstand vor allem auf Teppichboden, aufweisen. Wie für die Räder bleibt auch kaum nutzbarer Raum zum Anbringen von Haltegriffen zur Handhabung des Trolleys. Die bisher gebräuchlichen, einfachen und meist nur aus einer geraden Stange bestehenden Haltegriffe ergeben nicht nur eine starke Ermüdung des Handgelenkes, sie schränken vielmehr auch die sichere Handhabung des doch recht schweren Trolleys deutlich ein. Die ungünstige Haltung der Hände mit abgewinkelten Gelenken verursacht eine Überbelastung, was zu gesundheitlichen Schäden führen kann. Die Handhabung des Trolleys kann bei unruhiger Fahrt und während Steig- oder Sinkflug, wenn sie gegen den aufgestellten Flugzeugboden hinaufgeschoben werden müssen doch recht anstrengend und nicht einfach zu beherrschen sein. Unter ungünstigen Bedingungen können die bisherigen einfachen Haltegriffe sogar eine Verletzungsgefahr bedeuten. Dabei ist zu beachten, dass die Produktehaftpflicht unter Umständen zu erheblichen Folgekosten für die Hersteller von Trolleys führen kann. Wenn z.B. gesundheitliche Probleme mit den Handgelenken auftreten.

Es ist daher Aufgabe der vorliegenden Erfindung, die Unzulänglichkeiten der bisherigen Haltegriffe oder Handgriffe zu überwinden und eine wesentlich verbesserte Handhabung der Trolleys unter allen Betriebsbedingungen zu erreichen durch entsprechend verbesserte Haltegriffe. Deren Handhabung soll universeller, leichter, sicherer und ermüdungsfreier werden und gesundheitliche Schäden vermeiden helfen. Diese Aufgabe wird erfindungsgemäss gelöst durch einen multifunktionalen Haltegriff gemäss Anspruch 1.

Die Kombination von dessen Merkmalen bezüglich Anordnung und Ausformung von Kopfelementen und Verbindungsbogen ermöglicht eine optimale ergonomische Handhabung des Trolleys mit mehreren möglichen Haltepositionen für die Hände zum Ziehen, Stossen, Lenken, Manövrieren und Anheben des Trolleys. Die Haltepositionen der Hände sind dabei möglichst natürlich mit geringen Handgelenkabwinklungen und damit auch wenig ermüdend. Überdies ergibt sich eine grössere Sicherheit in der Handhabung wie auch für den Bediener des Trolleys. Es ermöglicht eine optimale Handhabung im Galley-Bereich, in einer Flugzeugkabine sowie am Boden und vor allem unter sehr eingeschränkten Platzverhältnissen. Der gerundete funktionale Aufbau des erfindungsgemässen Haltegriffs ergibt überdies auch eine ansprechende Erscheinungsform. Der Haltegriff ist robust gegen Schläge, Abnützungen und bezüglich statischer Belastungen, so dass der Trolley auch umgekehrt, d.h. auf den Handgriffen aufliegend, sicher abstellbar ist.

Die abhängigen Ansprüche beziehen sich auf besonders vorteilhafte Weiterbildungen der Erfindung mit weiter verbesserten Eigenschaften bezüglich Effizienz, Handhabung, Ergonomie und Sicherheit.

Im folgenden wird die Erfindung anhand von Beispielen und Figuren weiter erläutert. Dabei zeigt

Fig. 1:           schematisch den Aufbau des erfindungsgemässen Haltegriffs,

Fig. 2a,b,c      ein Ausführungsbeispiel in verschiedenen Ansichten,

Fig. 3a, b       ein weiteres Ausführungsbeispiel des Handgriffs,

Fig. 4            weitere, asymmetrische Querschnittsformen des Verbindungsbogens,

Fig. 5a, b und 6a, b   illustrieren verschiedene Handpositionen am erfindungsgemässen, multifunktionalen Handgriff,

Fig. 7, 8        weitere Ausführungsbeispiele und Handpositionen.

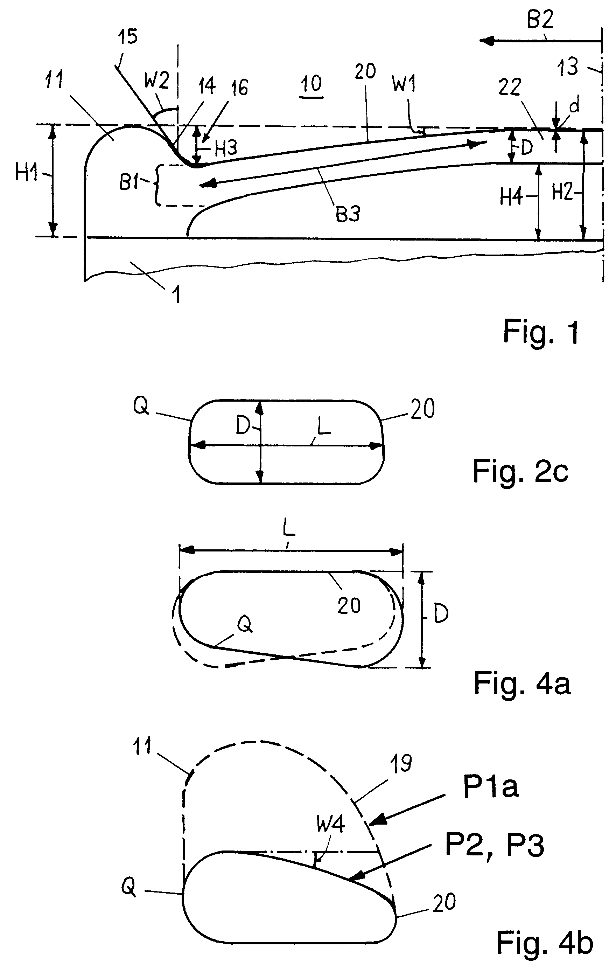

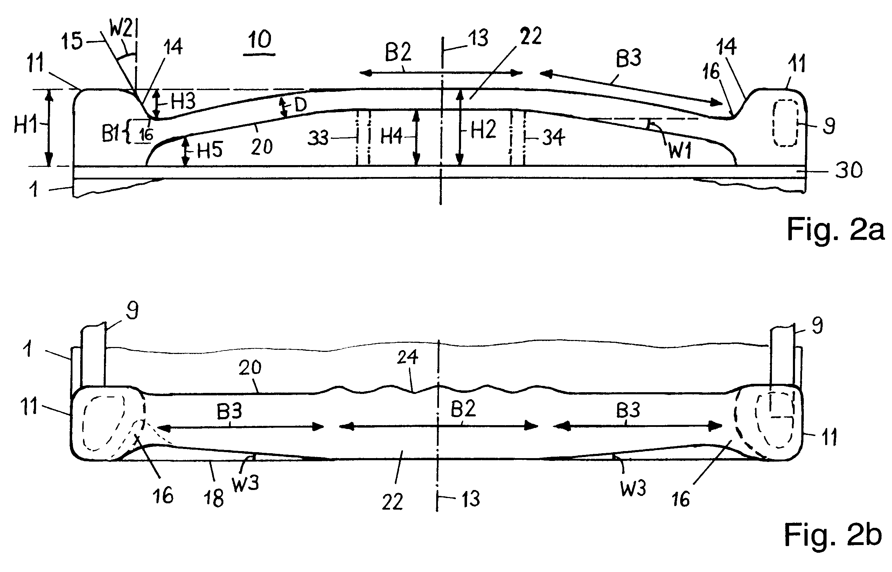

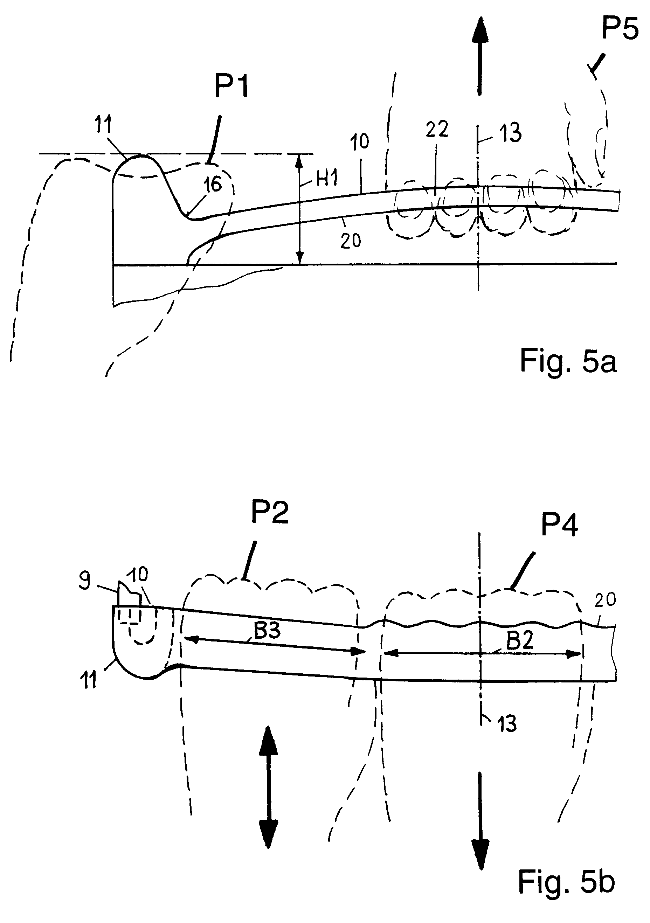

Der erfindungsgemässe Haltegriff 10 nach Fig. 1 und 2 weist zwei seitliche, gerundete am Trolley 1, bzw. an dessen Deckplatte 30 befestigte Kopfelemente 11 auf. Diese Kopfelemente verbindet ein Verbindungsbogen 20, welcher vom mittleren Bereich B1 der beidseitigen Kopfelemente ausgehend zur Mittelebene 13 des Trolleys hin im Bereich B3 dachförmig ansteigt und dort in einem horizontalen mittleren Bereich B2 einen Mittelgriff 22 mit eingeformten Fingermulden 24 bildet. Die Kopfelemente 11 weisen eine abgeflachte Flanke 14 auf mit einer Tangente 15 an die abgeflachten Flanke 14, welche einen spitzen Winkel W2 zur Vertikalen von vorzugsweise 25 - 40° bildet. Der Seitengriffbereich B3 des Verbindungsbogens 20 weist eine Neigung W1 von vorzugsweise 6 - 15° auf. Durch diesen Aufbau des Haltegriffs 10 werden gleichzeitig mehrere Vorteile erreicht: Bei der geforderten geringen Bauhöhe H1 wird so ein stabiler Haltegriff gebildet, welcher mehrere Handhabungspositionen unter optimalen ergonomischen Bedingungen ermöglicht. Durch den mittigen Ansatz des Bogens 20 im Bereich B1 wird zum einen eine handgerechte Mulde 16 für zwei verschiedene Handpositionen P1 und P3 (nach Fig. 5a, 6b und 7) gebildet, während gleichzeitig der mit dem Winkel W1 ansteigende Seitengriffbereich B3 für die Handpositionen P2 (Fig. 5b) und P3 optimale natürliche Handhaltungen erlaubt und wobei der Bogen 20 schliesslich im höchsten Bereich B2 mit entsprechend grösserer freier Höhe H4 genügend Platz für die Handpositionen P4 und P5 (Fig. 5a, 5b) schafft. Die Mulde 16 weist eine Tiefe H3 von vorzugsweise 10 - 20 mm auf. Die Höhe H5 nahe dem Kopf 11 ist dabei absichtlich relativ knapp bemessen, so dass hier für den kleinen Finger in den Haltepositionen P2 und P3 genügend Platz vorhanden ist, während anderseits der Daumen hier nicht genügend Platz finden kann, so dass stattdessen nur die Position P1 (nach Fig. 5a) eingenommen wird, bei der der Daumen in der Mulde 16 aufliegt und damit auch nicht unter dem Bogen 20 am Ort H5 steckenbleiben kann, wodurch eine wesentliche Verletzungsgefahr des Daumens bei starken Stössen vermieden wird. Der Bogen 20 weist weiter einen gerundeten flachen Querschnitt Q (Fig. 2c) auf, welcher einerseits dank seiner Länge L eine gute Festigkeit und Stabilität ergibt, welcher aber dennoch dank relativ geringerer Dicke D von z.B. 10 - 12mm dennoch nicht zuviel vom Raum der knappen Höhe H1 in Anspruch nimmt. Das Verhältnis von Länge L zu Dicke D liegt mit Vorteil zwischen 2 und 4.

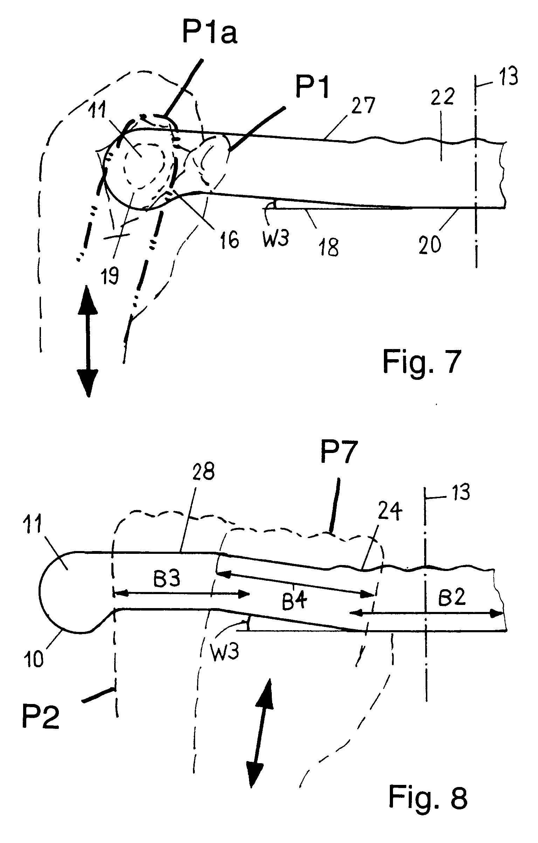

Neben der einfachen, gleichmässig gerundeten Form gemäss Beispiel in Fig. 2c kann der Querschnitt Q auch den Handpositionen ergonomisch angepasst, asymmetrisch gerundet sein gemäss Fig. 4a, b. Im Beispiel von Fig. 4b ist die obere Fläche um einen Winkel W4 von z.B. 10 - 20° geneigt, so dass für die Handpositionen P2, P3 die schräg von oben aufliegenden Hände optimal abgestützt werden können. In Fig. 4b ist auch eine Seitenansicht eines asymmetrisch gerundeten Kopfelementes 11 dargestellt. Statt in die Mulde 16 gemäss Position P1 kann hier der Daumen wahlweise auch auf die weitgerundete Vorderflanke 19 des Kopfes 11 gemäss Position P1a (Fig. 7) abgestützt werden. Je nach Bereich (B2, B3, B4) kann die Formgebung des Querschnitts Q unterschiedlich und optimal den entsprechenden, gewünschten Handpositionen angepasst sein, z.B. im Bereich von H5 so, dass der Daumen eben die Position von P1 einnimmt, wie oben erläutert. Die Figuren 2, 3, 5 - 8 zeigen Beispiele unterschiedlich gerundeter Kopfelemente 11 und verschiedener Bogenformen 26, 27, 28.

Um die volle Höhe H1 zu nutzen und damit der Trolley auch auf den Kopf gestellt stabil steht, ist die maximale Höhe H2 des Verbindungsbogens 20 nicht grösser als die Höhe H1 der Kopfelemente. Die Differenz d = H1 - H2 liegt vorzugsweise zwische 0 und 6 mm.

Eine leicht pfeilförmige Abwinklung um einen Winkel W3 von vorzugsweise 5 - 15° zur Querachse 18 ergibt eine weitere ergonomische Verbesserung für die Hand-Haltepositionen P2 und P3 im Bereich B3.

An beiden Längsenden eines Trolleys 1 wird mit Vorteil je ein erfindungsgemässer Haltegriff 10 angebracht. Deren Köpfe 11 werden dann beidseits mit je einer Längsstange 9 (Fig. 2a, b) zu einer rundumlaufenden Handgriffanordnung verbunden, bzw. zusammengesteckt.

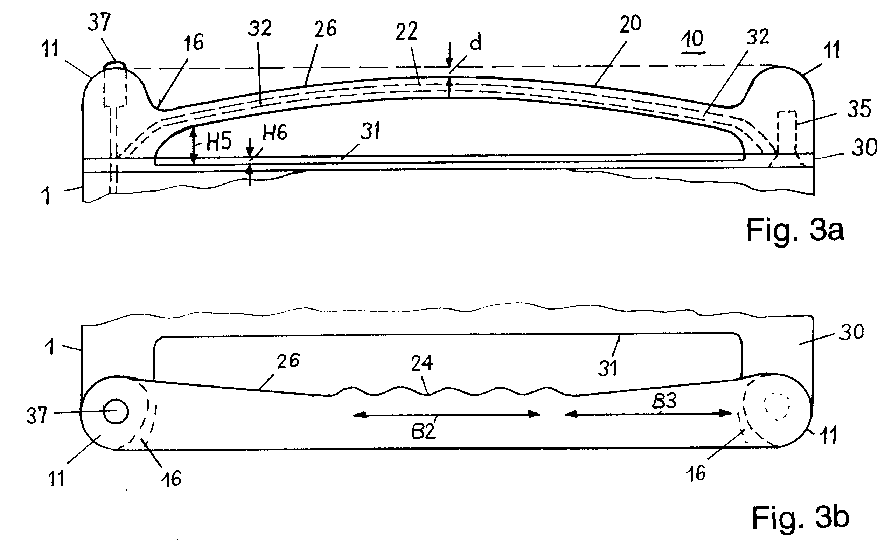

Wenn der Haltegriff besonders hohe, auf seinen Mittelteil B2 wirkende Kräfte ausgelegt sein soll, so können dort einseitig oder beidseitig zusätzliche Stützen 33, 34 nach Fig. 2a eingesetzt werden, welche den Mittelbereich 22 mit der Deckplatte 30 verbinden. Eine besonders rationelle Herstellung eines leichten und stabilen Verbindungsbogens 20 kann z.B. durch Spritzen aus kurzfaserverstärktem Kunststoff erreicht werden. Es kann auch ein Verstärkungskern 32 aus Langfasermaterial oder aus einem leichten Metallbügel bestehend, welcher umspritzt wird, eingelegt sein, wie in Fig. 3a gezeigt ist. Der Verstärkungskern 32 kann z.B. aus einem Glas-, Carbon-oder Aramid-Thermoplast-Verbund bestehen, welcher z.B. mit Glasfaser verstärktem Polyamid umspritzt ist. Auch Druckgiessen oder Schmieden von Leichtmetallen wie von Aluminiumlegierungen bilden vorteilhafte Herstellverfahren. Der Haltegriff 20 ist z.B. mittels einer Schraube 35 beidseitig und leicht demontierbar mit der Deckplatte 30 verbunden.

Fig. 3a, b zeigt eine weitere Ausführungsform 26 mit gleichmässig gebogenem Verbindungsbogen 20. Zur weiteren Reduktion der Bauhöhe H1 der Kopfelemente 11 ist hier in die Deckplatte 30 eine Vertiefung 31 mit einer Tiefe H6 von z.B. 4 - 8 mm eingeformt, welche unter dem Bogen 20 zusätzlichen Platz für die Handpositionen P2 - P7 schafft.

In den erfindungsgemässen multifunktonalen Haltegriff können je nach Bedarf sogar noch zusätzliche Bedienungsfunktionen integriert werden, z.B. in Form eines Bremslöseknopfs 37 oben an einem Kopfteil 11, wie dies in Fig. 3a dargestellt ist.

Der Haltegriff 10 ermöglicht folgende ergonomisch günstige Handpositionen P1 bis P7 zum universellen Manövrieren des Trolleys:

P1: Beide Hände umfassen seitlich die Kopfelemente 11. Die Mulde 16 bildet hier eine dem Daumen angepasste, diesen stützende Abstützfläche (Fig. 5a und 7). Die gerundete Ausführung des Kopfes 11 ermöglicht es, die greifende Hand um diesen Kopf in die angenehmste Lage zu drehen, je nachdem, ob mit gestreckten Armen oder mit angewinkelten Ellbogen gestossen wird. Auch das Lenken des Trolleys durch Ziehen am einen und Stossen am andern Kopfelement 11 wird dadurch erleichtert. Diese Position P1 eignet sich vor allem für eine senkrechte Handhaltung. Mit einer besonders tiefen Mulde 16 ist sogar eine Handposition P1 möglich, welche nicht über die Höhe H1 des Kopfes 11 hinausreicht, z.B. mit H3 ca. 25 mm, H1 ca. 45 mm.

P2: Beide Hände sind seitlich im Bereich B3 am gewölbten Verbindungsbogen 20 aufgelegt (Fig. 5b, 8). Dank der leichten Neigung nach oben mit dem Winkel W1 liegen die Hände in horizontaler Handhaltung ganz natürlich und somit ermüdungsfrei auf. Diese Position eignet sich zum Ziehen wie auch zum Stossen mit gestreckten Armen.

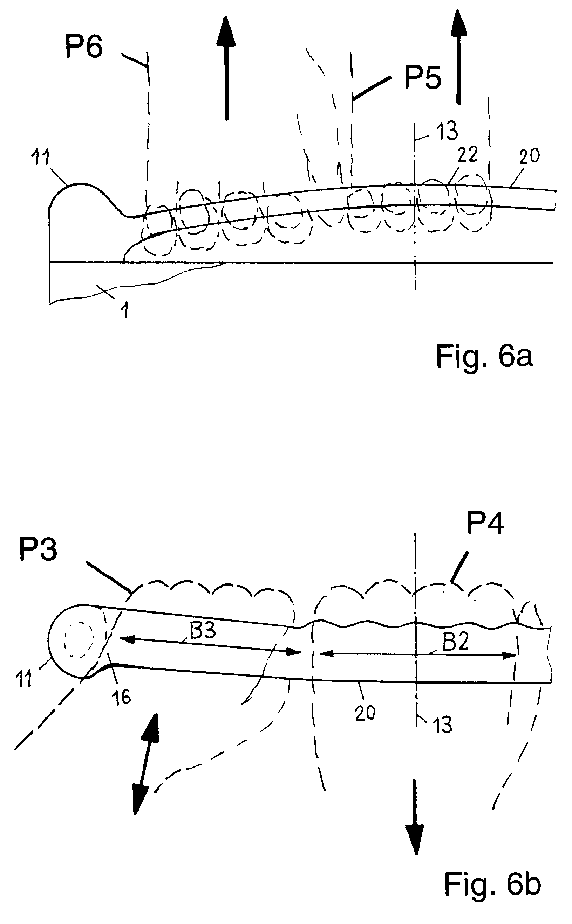

P3: Beim Stossen mit gebogenen Armen werden die Handgelenke im Bereich B3 gegen aussen gedreht (Fig. 6b). In dieser Stellung finden die äusseren Handballen wiederum eine optimal angepasste Abstützfläche in der Mulde 16 an den Köpfen 11. Die Mulde 16 bildet also eine optimale Abstützfläche für beide Handpositionen P1 und P3.

P4: Ziehen des Trolleys mit einer Hand am Mittelgriff 22 im Bereich B2 (Fig. 5b). Die vier Fingermulden 24 ergeben automatisch erfühlbar, auch ohne Hinschauen, eine optimale Zentrierung der Handposition.

P5: Am gleichen Ort B2, mit einer Hand angreifend, kann der Trolley auch gut angehoben werden (Fig. 5a).

P6: Beidseitig im Bereich B3 anheben des Trolleys mit beiden Händen (Fig. 6a).

P7: In einem weiteren Beispiel von Fig. 8 weist der Verbindungsbogen 20 von oben betrachtet eine Formgebung 28 mit drei unterschiedlichen Bereichen B2, B3, B4 auf. Der Seitenbereich B3 verläuft vom Kopf 11 ausgehend zuerst in Richtung der Querachse 18, um dann im Bereich B4 nach vorn umzubiegen mit einem grösseren Pfeilwinkel W3 von z.B. 10 - 15°, und anschliessend in den geraden Bereich B2 überzuleiten. Damit ist neben der Position P2 (hier z.B. mit gestreckten Armen) im Bereich B3 noch eine weitere Handposition P7 im Bereich B4 zum Ziehen oder Stossen mit gebogenen Armen möglich. Der Bereich B4 überlappt dabei am Rand die Bereiche B3 und B2. In den äusseren Fingermulden 24 liegen dann die Zeigefinger in der Position P7 auf.

Ein weiterer wichtiger Vorteil dieses multifunktionalen erfindungsgemässen Handgriffs liegt darin, dass

- einmal mehrere Handpositionen P1 bis P7 möglich sind, womit dank Abwechslung weniger Ermüdungen und Verkrampfungen der Hände auftreten,

- zum andern können die Griffpositionen auch einfach, leicht und rasch gewechselt werden (z.B. P1-P2, P2-P3, P2-P7, P3-P4, usw.). Die Hände finden dabei die natürlichen und ungefährlichen Positionen quasi ganz automatisch. Dies erhöht wiederum die Beherrschbarkeit und die sichere Bedienung des Trolleys, vor allem bei unruhiger Fahrt und bei hohem Fahrwiderstand.

Die erfindungsgemässe Handgriffanordnung ist mit wenigen Teilen einfach und kostengünstig aufgebaut, leicht montierbar und auch einfach zu reparieren.

**Patentansprüche**

1. Haltegriff für einen fahrbaren Behälter, insbesondere für einen Trolley in Passagierflugzeugen, in Form eines an seinen beiden Enden befestigten Bügels, dadurch gekennzeichnet, dass der Haltegriff (10) zwei seitliche, gerundete und am Trolley (1) befestigte Kopfelemente (11)
sowie einen die Kopfelemente verbindenden Verbindungsbogen (20)
mit einem flachen, gerundeten Querschnitt (Q) aufweist,
welcher Verbindungsbogen vom mittleren Bereich (B1) der beidseitigen Kopfelemente ausgehend
zur Mittelebene (13) des Trolleys hin dachförmig ansteigt und
wobei die Kopfelemente eine abgeflachte Flanke (14) zum Verbindungsbogen hin aufweisen,
welche eine handgerechte Mulde (16) bilden.

2. Haltegriff nach Anspruch 1, dadurch gekennzeichnet, dass der Verbindungsbogen in der Mitte einen handbreiten, horizontalen Mittelgriff-Bereich (B2) mit vier Fingermulden (24) aufweist.

3. Haltegriff nach Anspruch 1, dadurch gekennzeichnet, dass der Verbindungsbogen unmittelbar an die Kopfelemente anschliessend je einen mindestens handbreiten Seitengriffbereich (B3) mit einer Neigung W1 von 6 - 15° aufweist.

4. Haltegriff nach Anspruch 1, dadurch gekennzeichnet, dass die Tangente (15) zur abgeflachten Flanke (14) einen spitzen Winkel W2 zur Vertikalen bildet.

5. Haltegriff nach Anspruch 4, gekennzeichnet durch einen Winkel W2 von 25 - 40°.

6. Haltegriff nach Anspruch 1, dadurch gekennzeichnet, dass der Verbindungsbogen im Seitengriffbereich (B3) einen Pfeilwinkel W3 von 5 - 15° zur Querachse (18) bildet.

7. Haltegriff nach Anspruch 1, dadurch gekennzeichnet, dass die Mulde (16) zwischen Kopfelementen und Verbindungsbogen eine Tiefe (H3) von 10 - 25 mm aufweist.

8. Haltegriff nach Anspruch 1, dadurch gekennzeichnet, dass die maximale Höhe (H2) des Verbindungsbogens (20) um eine Differenz (d) von 0 - 6 mm kleiner ist als die Höhe (H1) der Kopfelemente.

9. Haltegriff nach Anspruch 1, dadurch gekennzeichnet, dass der Querschnitt (Q) des Verbindungsbogens (20) asymmetrisch gerundet ist.

10. Haltegriff nach Anspruch 1, dadurch gekennzeichnet, dass das Länge/Dickeverhältnis (L/D) des Querschnitts (Q) zwischen 2 und 4 liegt.

11. Haltegriff nach Anspruch 1, dadurch gekennzeichnet, dass er aus faserverstärktem Kunststoff gespritzt ist.

12. Haltegriff nach Anspruch 11, dadurch gekennzeichnet, dass ein Verstärkungskern (32) aus Langfasermaterial oder Metall eingelegt ist.

13. Haltegriff nach Anspruch 1, dadurch gekennzeichnet, dass er aus einem Leichtmetall besteht.

14. Haltegriff nach Anspruch 1, dadurch gekennzeichnet, dass unter dem Verbindungsbogen (20) eine Vertiefung (31) in die Deckplatte (30) des Trolleys geformt ist.

15. Haltegriff nach Anspruch 1, dadurch gekennzeichnet, dass in den Haltegriff noch ein zusätzliches Bedienungselement (37) mit einer Zusatzfunktion integriert ist.

16. Handgriffanordnung, dadurch gekennzeichnet, dass an beiden Längsenden des Trolleys (1) oben je ein Haltegriff (10) nach einem der vorangehenden Ansprüche angeordnet ist, wobei deren Kopfelemente (11) an beiden Seiten des Trolleys je mit einer Längsstange (9) verbunden sind.

## Claims

1. Handle for a movable container, particularly for a trolley in passenger aircraft, in the form of a semicircular member fixed at its two ends, characterized in that the handle (10) has two lateral, rounded head elements (11) fixed to the trolley (1), as well as a connecting bow (20) connecting the head elements, having a flat, rounded cross-section (Q), said connecting bow emanating from the central area (B1) of the head elements on both sides and rising in roof-shaped manner to the central plane (13) of the trolley and in which the head elements have a flattened flank (14) towards the connecting bow, so as to form a hand-correct depression (16).

2. Handle according to claim 1, characterized in that the connecting bow has four finger depressions (24) in the centre of a hand-wide, horizontal central gripping area (B2).

3. Handle according to claim 1, characterized in that the connecting bow, directly connecting on to the head elements in each case has an at least hand-wide lateral gripping area (B3) with a slope (W1) of 6 to 15°.

4. Handle according to claim 1, characterized in that the tanent (15) to the flattened flank (14) forms an acute angle W2 to the vertical.

5. Handle according to claim 4, characterized by an angle W2 of 25 to 40°.

6. Handle according to claim 1, characterized in that the connecting bow in the lateral grip area (B3) forms an angle of sweepback W3 of 5 to 15° to the transverse axis (18).

7. Handle according to claim 1, characterized in that the depression (16) between the head elements and connecting bow has a depth (H3) of 10 to 25 mm.

8. Handle according to claim 1, characterized in that the maximum height (H2) of the connecting bow (20) is smaller by a difference (d) of 0 to 6 mm than the height (H1) of the head elements.

9. Handle according to claim 1, characterized in that the cross-section (Q) of the connecting bow (20) is asymmetrically rounded.

10. Handle according to claim 1, characterized in that the length/thickness ratio (L/D) of the cross-section (Q) is between 2 and 4.

11. Handle according to claim 1, characterized in that it is injection moulded from fibre-reinforced plastic.

12. Handle according to claim 11, characterized in that a long fibre material or metal reinforcing core (32) is inserted.

13. Handle according to claim 1, characterized in that it is made from a light metal.

14. Handle according to claim 1, characterized in that below the connecting bow (20) a depression (31) is shaped in the trolley cover plate (30).

15. Handle according to claim 1, characterized in that into the handle is integrated an additional operating element (37) with an additional function.

16. Handle arrangement, characterized in that at the top of both longitudinal ends of the trolley (1) is provided in each case a handle (10) according to one of the preceding claims, whose head elements (11) are connected on both sides of the trolley to in each case one longitudinal rod (9).

**Revendications**

1. Barre de maintien pour un conteneur mobile, en particulier pour un chariot dans les avions à passagers, en forme d'un étrier fixé à ses deux extrémités, caractérisée en ce que la barre de maintien (10) a deux éléments de tête (11) latéraux, arrondis et attachés au chariot (1)

   ainsi qu'un arc de raccordement (20) interconnectant les éléments de tête

   ayant une forme plate et arrondie en section transversale (Q)

   cet arc de raccordement à partir de la région centrale (B1) des éléments de tête disposés sur les deux côtés

   montant en forme de toit vers le plan central (13) du chariot et

   les éléments de tête étant pourvus d'un flanc aplati (14) s'étendant vers l'arc de raccordement,

   qui forme un creux (16) adapté à la main.

2. Barre de maintien selon la revendication 1, caractérisée en ce que l'arc de raccordement a en son centre une région centrale horizontale (B2) ayant la largeur d'une main et pourvue de quatre creux à doigt (24).

3. Barre de maintien selon la revendication 1, caractérisée en ce que l'arc de raccordement a directement adjacent à chaque élément de tête une région latérale (B3) ayant une largeur correspondant au moins à la largeur d'une main, avec une inclinaison W1 de 6 à 15°.

4. Barre de maintien selon la revendication 1, caractérisée en ce que la tangente (15) au flanc aplati (14) forme un angle aigu W2 avec la verticale.

5. Barre de maintien selon la revendication 4, caractérisée par un angle W2 de 25 à 40°.

6. Barre de maintien selon la revendication 1, caractérisée en ce que l'arc de raccordement forme dans la région latérale (B3) un angle de flèche W3 de 5 à 15° par rapport à l'axe transversal (18).

7. Barre de maintien selon la revendication 1, caractérisée en ce que le creux (16) entre les éléments de tête et l'arc de raccordement a une profondeur (H3) de 10 à 25 mm.

8. Barre de maintien selon la revendication 1, caractérisée en ce que la hauteur maximale (H2) de l'arc de raccordement (20) est inférieure, d'une différence (d) de 0 à 6 mm, à la hauteur (H1) des éléments de tête.

9. Barre de maintien selon la revendication 1, caractérisée en ce que la section transversale (Q) de l'arc de raccordement (20) est arrondie de façon asymétrique.

10. Barre de maintien selon la revendication 1, caractérisée en ce que le rapport longueur/épaisseur (L/D) de la section transversale (Q) est situé entre 2 et 4.

11. Barre de maintien selon la revendication 1, caractérisée en ce qu'elle est extrudée en matière synthétique renforcée par fibres.

12. Barre de maintien selon la revendication 11, caractérisée en ce qu'un noyau de renforcement (32) en matière à fibres allongées ou métallique est encastré.

13. Barre de maintien selon la revendication 1, caractérisée en ce qu'elle consiste en métal léger.

14. Barre de maintien selon la revendication 1, caractérisée en ce qu'au dessous de l'arc de raccordement (20) un creux (31) est formé dans la plaque supérieure (30) du chariot.

15. Barre de maintien selon la revendication 1, caractérisée en ce que dans la barre de maintien un élément de commande supplémentaire (37) avec une fonction supplémentaire est intégrée.

16. Dispositif de barre à main, caractérisé en ce qu'en haut de chacune des extrémités longitudinales du chariot (1) une barre de maintien (10) selon l'une des revendications précédentes est prévue, les éléments de tête (11) de ces barres de maintien étant reliés ensemble par une tige longitudinale (9) sur chacun des deux côtés du chariot.

Fig. 1

Fig. 2c

Fig. 4a

Fig. 4b

Fig. 2a

Fig. 2b

Fig. 3a

Fig. 3b

EP 0 672 572 B1

Fig. 5a

Fig. 5b

Fig. 6a

Fig. 6b

Fig. 7

Fig. 8